# EUROPÄISCHE PATENTANMELDUNG

(11) **EP 0 764 556 A2**
(43) Veröffentlichungstag der Anmeldung: **26.03.1997**
(21) Anmeldenummer: 96114447.4
(22) Anmeldetag: 10.09.1996
(51) Int. Cl.: B60K 28/04

(54) **Selbstfahrendes Fahrzeug mit einem insbesondere zum Starten und Zünden eines Verbrennungsmotors dienenden Stromkreis**

(30) Priorität: 19.09.1995 US 529968
(71) Anmelder: DEERE & COMPANY, Moline Illinois 61265-8098 (US)
(72) Erfinder: Peterson, Rudolph Andrew, Jr., Beaver Dam, Wisconsin 53916 (US)
(74) Vertreter: Feldmann, Bernhard

(57) **Zusammenfassung**

Bei einem selbstfahrenden Fahrzeug, insbesondere bei einem Rasentraktor, ist der Stromkreis zum Starten und Zünden des Verbrennungsmotors, der sich grundsätzlich automatisch abstellt, wenn die Bedienungsperson den Fahrersitz verläßt, so ausgelegt, daß der Verbrennungsmotor auch nach einem Verlassen des Fahrersitzes durch die Bedienungsperson weiter betrieben werden kann, sofern gewisse sicherheitstechnische Bedingungen bewußt eingehalten werden.

## Beschreibung

Die Erfindung bezieht sich auf ein selbstfahrendes Fahrzeug, insbesondere Rasentraktor, mit einem insbesondere zum Starten und Zünden eines Verbrennungsmotors dienenden Stromkreis, der einen Sicherheitsschalter, der bei Abwesenheit eines Fahrers öffnet, einen Zubehörschalter, der zum Betreiben eines Antriebs aus einer AUS-Stellung in eine Betriebsstellung verstellbar ist, und einen Zustandschalter aufweist, der in Abhängigkeit von einer Fahrzeugbedingung verstellbar ist, wobei sich der Verbrennungsmotor je nach der Schaltstellung von Sicherheits-, Zubehör- und/oder Zustandschalter selbsttätig abstellt.

Derartige Fahrzeuge (US-A-4 317 500) sind in der Regel in Form von Kleinschleppern ausgebildet, die vornehmlich in der Rasen- und Grundstückspflege eingesetzt werden. Sie haben wenigstens einen Antrieb, zumeist in Form einer Zapfwelle, zum Antreiben eines anzuschließenden Gerätes, wie eines Grasmähers. Dem Einrückhebel für die Zapfwelle ist der Zubehörschalter zugeordnet, und die Zapfwelle kann nur umlaufen, wenn der Zubehörschalter im Stromkreis bestimmte Verbindungen herstellt oder unterbricht. Außerdem sind solche Fahrzeuge mit vielerlei Sicherheitsvorkehrungen ausgestattet, da sie häufig von nicht autorisiertem oder nicht oder nur wenig geschultem Personal betrieben werden. Bei dem eingangs genannten Fahrzeug bestehen solche Sicherheitsvorkehrungen darin, daß das Fahrzeug nicht angelassen werden kann, wenn sich der Zubehörschalter nicht in seiner AUS-Stellung befindet oder wenn sich der Zustandschalter in einer Stellung befindet, die einen Fahrbetrieb nicht ausschließt. Dies ist bei geöffnetem Zustandschalter der Fall, beispielsweise, wenn eine Bremse nicht angezogen ist oder wenn das Getriebe sich in einer Schaltstellung befindet. Außerdem kann das Fahrzeug nur in Betrieb genommen werden, wenn sich eine Bedienungsperson auf dem Fahrersitz befindet, da dadurch der Sicherheitsschalter in seine geschlossene Position verstellt wird. Verläßt die Bedienungsperson den Fahrersitz, dann öffnet der Sicherheits- oder Sitzschalter und der Fahrzeugmotor stellt sich automatisch ab und damit auch der Zapfwellenantrieb. Aus Sicherheitsgründen ist dies so gewollt. Andererseits gibt es aber durchaus Einsatzbedingungen, die zum Beispiel den Betrieb eines Zusatzantriebs wünschenswert erscheinen lassen, wenn sich eine Bedienungsperson nicht auf dem Fahrersitz befindet und wenn das Fahrzeug stillsteht. Eine Verdrahtung für solche Einsatzbedingungen geht aus dem Dokument US-A-5 203 440 hervor.

Sind bei diesen bekannten Systemen z. B. Einstellarbeiten bei laufendem Motor vorzunehmen, so muß eine zweite Person auf dem Fahrersitz Platz nehmen, um nur den Motor betreiben zu können. Dies ist natürlich aufwendig und mit zusätzlichen Gefahren für die Person verbunden, die die Einstell- oder Wartungsarbeiten ausführt. Damit aber der Verbrennungsmotor allein und ohne Hilfspersonal betrieben werden kann, sieht die Erfindung vor, daß der Stromkreis einen Überbrückungskreis aufweist, in dem der Zustandschalter vorgesehen ist und der einenends stromaufwärts des Sicherheitsschalters an dessen Zuleitung und anderenends an den Zubehörschalter derart angeschlossen ist, daß er bei sich in seiner AUS-Stellung befindlichem Zubehörschalter und geschlossenem Zustandschalter geerdet ist. Auf diese Weise ist eine zweite Erdungsmöglichkeit mit einfachen Mitteln geschaffen, die bei einer Abwesenheit des Fahrers vom Fahrersitz nur wirksam wird, wenn der Antrieb, wie eine Zapfwelle, nicht betriebsbereit ist und wenn das Fahrzeug durch eigene Kraft nicht fortbewegt werden kann, weil beispielsweise eine Feststellbremse angezogen ist oder das Getriebe sich in seiner Neutralstellung befindet. Von besonderem Vorteil ist dabei, daß der Sicherheitsschalter im geschlossenen Zustand geerdet ist, daß stromaufwärts des Sicherheitsschalters ein Relais vorgesehen ist, dessen Relaisschalter bei erregter Spule eine den Motor sonst abstellende Leitung unterbricht, und daß stromabwärts des Relais und stromaufwärts des Sicherheitsschalters der Überbrückungskreis mit seinem einen Ende an die Zuleitung zum Sicherheitsschalter zwischen Relais und Sicherheitsschalter angreift. Zweckmäßig ist ferner, daß stromaufwärts des Sicherheitsschalters ein Relais vorgesehen ist, dessen Relaisschalter bei erregter Spule und geschlossenem Sicherheitsschalter den Zubehörschalter in seiner Betriebsstellung mit der Masse zum Betreiben des Antriebs verbindet. Bei diesen Relais kann es sich um ein einziges dem Sicherheitsschalter vorgeschaltetes Sitzrelais handeln, wobei das Relais deaktiviert und der Verbrennungsmotor abgeschaltet wird, sobald bei einer sich nicht auf dem Sitz befindlichen Bedienungsperson, d. h. bei offenem Sicherheitsschalter, der Zustandschalter in seine offene Stellung oder der Zubehörschalter in seine Betriebsstellung verstellt wird. Befindet sich dagegen das Fahrzeug im Einsatz mit laufendem Antrieb und verläßt die Bedienungsperson den Fahrersitz, so stellt sich der Motor wie bisher selbsttätig aus.

Der Stromkreis bei solchen Fahrzeugen hat einen Zündschalter und ein Startrelais, weshalb die erfindungsgemäße Verdrahtung ferner noch vorsieht, daß der Ausgang der Spule des Startrelais mit dem Eingang des Zustandschalters verbunden und bei sich in seiner AUS-Stellung befindlichem Zubehörschalter geerdet ist und daß das dem Sicherheitsschalter vorgeschaltete Relais mit seinem Spuleneingang mit einer Stromquelle in der Start- und in der Betriebsstellung des Zündschalters verbunden ist, wobei die Verbindung zwischen Startrelaisspule und Zustandschalter und die Verbindung zwischen Sicherheitsschalter und zugehöriger Relaisspule über eine eine Sperrdiode aufweisende Leitung miteinander verbunden sind. Damit kann das Fahrzeug auch angelassen werden, wenn der Sicherheitsschalter offen und der Zustandschalter geschlossen und geerdet ist.

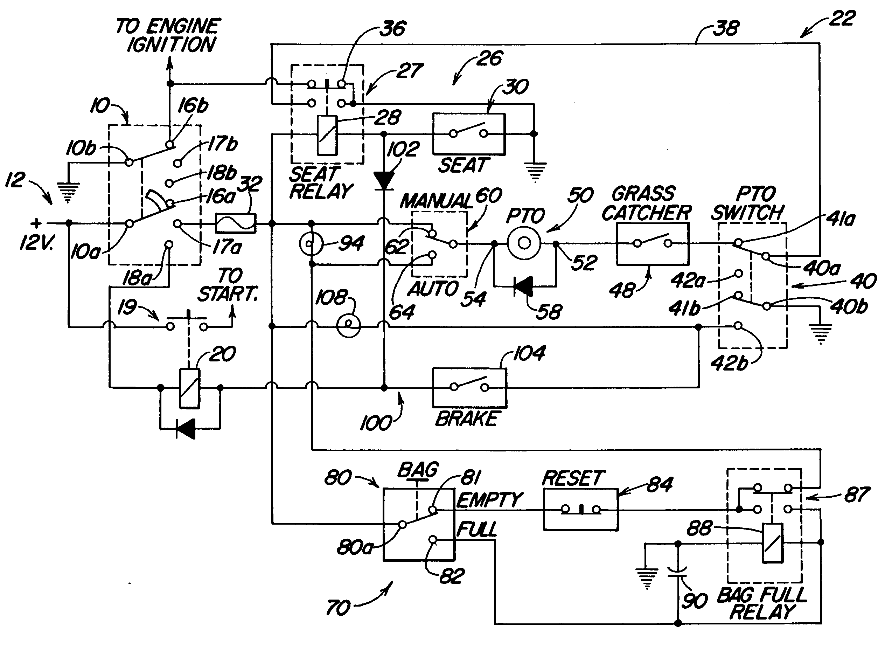

In der einzigen Figur ist ein Ausführungsbeispiel für eine Verdrahtung nach der Erfindung dargestellt.

Und zwar ist dort eine elektronische Steuerung für ein Fahrzeug, insbesondere für einen in der Rasen- und Grundstückspflege einsetzbaren Kleinschlepper, schematisch aufgezeichnet. Man erkennt einen Zündschalter 10 mit Eingangsklemmen 10a und 10b, von denen die Klemme 10a mit dem Pluspol einer Batterie 12 und die Klemme 10b mit dem negativen Pol verbunden bzw. an Masse angelegt ist. Der Zündschalter 10 ist mit sechs Ausgangsklemmen 16a, 17a, 18a und 16b, 17b und 18b versehen und in der in der Figur gezeigten AUS-Stellung über die Klemme 16b an Masse angeschlossen. Der Zündschalter 10 kann eine Betriebsstellung, wenn er aus der dargestellten Stellung in eine mittlere Stellung verstellt wurde, und eine Startstellung einnehmen, wenn er in seine unterste Stellung verstellt wurde. In der Betriebsstellung ist die Ausgangsklemme 17a mit dem Pluspol der Batterie 12 und in der Startstellung sind die Ausgangsklemmen 17a und 18a mit dem Pluspol der Batterie verbunden, während der Anschluß der Klemme 16b an die Masse unterbrochen ist. In üblicher Weise ist dem Zündschalter 10 ein Startrelais 19 zugeordnet, dessen Spule 20 mit einer Seite an die Ausgangsklemme 18a angeschlossen ist. Die andere Seite der Spule 20 ist an einen selektiven Erdungskreis angeschlossen, der einen Bestandteil eines Verriegelungskreises 22 bildet. Bei erregtem Relais 19 schließt der zugehörige Relaisschalter, und der Stromkreis zwischen der Batterie 12 und dem Anlasser des Fahrzeugs wird geschlossen, so daß die Kurbelwelle des Verbrennungsmotors in Drehung versetzt wird.

Die Klemme 16b ist mit dem Zündkreis oder mit der Magnetzündung des Verbrennungsmotors derart verbunden, daß bei sich in seiner AUS-Stellung befindlichem Zündschalter 10 der Zündkreis an Masse angelegt wird, so daß der Motor sich abstellt. Wie aus der Zeichnung ferner noch zu ersehen ist, ist die Klemme 16b außerdem mit dem Verriegelungskreis 22 verbunden, der unter bestimmten Bedingungen den Zündkreis ebenfalls an Masse anlegt, so daß sich in einem solchen Fall der Motor sofort abstellt. Zu solchen Bedingungen gehört beispielsweise der Umstand, ob eine Bedienungsperson auf dem Fahrersitz Platz genommen hat oder nicht. Zu diesem Zweck ist der Verriegelungskreis 22 mit einem Anwesenheitsschalter 26, der bei Abwesenheit einer Bedienungsperson offen ist, versehen. Sobald aber der Anwesenheitsschalter öffnet, stellt sich der Verbrennungsmotor automatisch ab. Der Anwesenheitsschalter 26 besteht im einzelnen aus einem Relais 27 mit einer Spule 28, deren eine oder erste Leitung mit der einen Klemme eines in den Ansprüchen als Sicherheitsschalter bezeichneten Sitzschalters 30 verbunden ist. Die andere oder zweite Klemme dieses Sitzschalters ist an Masse angelegt und damit geerdet. Die zweite Leitung an der anderen Seite der Spule 28 ist über eine Sicherung 32 an die Klemme 17a des Zündschalters 10 angeschlossen, so daß bei sich in seiner Betriebs- oder Startstellung befindlichem Zündschalter 10 und bei geerdeter erster Leitung der Spule 28 das Relais 27 aktiviert wird. Ist das Relais 27 aktiviert, so verstellt sich der Relaisschalter des Relais 27 aus seiner in der Zeichnung gezeigten oberen Stellung in eine untere Stellung, in der eine Leitung 38 über eine der Erdungsklemmen 36 des Relais 27 an Masse angeschlossen ist. Ist das Relais 27 dagegen nicht aktiviert, d. h. es befindet sich in dem in der Zeichnung dargestellten Zustand, dann ist der Zündkreis über die obere der beiden Erdungsklemmen 36 des Relais 27 wiederum an Masse angeschlossen und der Motor kann nicht laufen. Die erste Leitung der Relaisspule 28 kann einmal bei geschlossenem Sitzschalter 30 an Masse angelegt werden oder durch einen nachfolgend noch zu beschreibenden alternativen Kreis.

Die Leitung 38 verbindet die untere Erdungsklemme 36 bzw. den Relaisschalter des Relais 27 in seiner unteren Stellung mit einer Ausgangsklemme 40a eines Zubehörschalters in Form eines Zapfwellenschalters 40. Eine zweite Ausgangsklemme 40b des Zapfwellenschalters 40 ist an Masse angelegt. Außerdem ist der Zapfwellenschalter 40 mit vier Eingangsklemmen versehen, die mit 41a, 42a und 41b, 42b bezeichnet sind. In der in der Zeichnung dargestellten Betriebsstellung des Zapfwellenschalters 40 ist die Leitung 38 über die Eingangsklemme 41a an die Ausgangsklemme eines Zustandschalters 48 angeschlossen, der bei dem bevorzugten Ausführungsbeispiel anzeigt, ob ein Grasfangsack odgl. sich in seiner Betriebsstellung am Fahrzeug befindet. Ist dies nicht der Fall, so ist der Zustandschalter 48 offen. Die andere Klemme oder die Eingangsklemme des Zustandschalters 48 ist an die Ausgangsklemme 52 einer Aktivierungsspule für eine elektrische Zapfwellenkupplung 50 angeschlossen. Die Eingangsklemme 54 der Aktivierungsspule ist mit dem Pluspol der Batterie 12 verbindbar. Wenn dies der Fall ist, kann die Zapfwelle unter der Voraussetzung betrieben werden, daß der Zustandschalter 48 geschlossen, der Zapfwellenschalter 40 in seiner Betriebsstellung und die Leitung 38 bei erregtem Sitzrelais 27 an Masse angeschlossen ist. Eine zwischen den Klemmen 52 und 54 vorgesehene Diode 58 soll Sperrspannungsspitzen limitieren.

Aus der Zeichnung geht ferner hervor, daß die Eingangsklemme 54 der Aktivierungsspule der Zapfwellenkupplung an die Ausgangsklemme eines Auswahlschalters 60 angeschlossen ist. Der Auswahlschalter 60 hat eine obere und eine untere Schaltstellung. In der oberen Schaltstellung ist die Eingangsklemmme 54 der Aktivierungsspule der Zapfwellenkupplung 50 über die obere Eingangsklemme 62 des Auswahlschalters 60 und über die Sicherung 32 mit dem Pluspol der Batterie 12 verbunden, sofern sich der Zündschalter 10 in seiner Betriebs- oder in seiner Startstellung befindet. In der unteren Schaltstellung des Auswahlschalters 60 ist die Eingangsklemme 54 der Aktivierungsspule der Zapfwellenkupplung 50 mit der unteren Eingangsklemme 64 des Auswahlschalters 64 verbunden, wobei die untere Eingangsklemme 64 mit einem zustandsabhängigen Kreis 70 derart verdrahtet ist, daß die Zapfwellenkupplung 50 nur in dem Fall aktiviert werden kann, wenn die Elektronik erkennt, daß der gewünschte Zustand oder die entsprechende Bedingung vorhanden ist.

Bei dem bevorzugten Ausführungsbeispiel handelt es sich bei dem gewünschten Zustand um die Bedingung, ob der Grasfangsack gefüllt ist oder nicht. Bei gefülltem Grasfangsack kann bei sich in seiner unteren Stellung befindlichem Auswahlschalter 60 die Zapfwelle nicht betrieben werden, sie stellt sich vielmehr in einem derartigen Zustand automatisch ab. Im einzelnen geht aus der Zeichnung hervor, daß der zustandsabhängige Kreis 70 eingangsseitig über die Sicherung 32 an den Pluspol der Batterie 12 angeschlossen ist, sofern sich der Zündschalter 10 in seiner Betriebsstellung befindet. Ausgangsseitig führt eine Leitung des Zustandkreises 70 bis an die untere Eingangsklemme 64 des Auswahlschalters 60. Zu dem zustandsabhängigen Kreis 70 gehört ein Grasfangsackschalter 80, dessen Schaltelement eine obere und eine untere Position einnehmen kann, und zwar befindet sich das Schaltelement in seiner oberen Stellung, wenn der Fangsack noch nicht gefüllt ist, und in seiner unteren Stellung, wenn der Fangsack mit aufgesammeltem Gras gefüllt ist. Der Schalter 80 ist mit einer mit der Sicherung 32 verbundenen Eingangsklemme 80a und mit zwei Ausgangsklemmen 81 und 82 versehen. Dabei ist die obere Ausgangsklemme 81 mit einem normalerweise geschlossenen Rückstellschalter 84 verbunden, der seinerseits an die beiden Eingangsklemmen eines Relaisschalters eines Relais 87 angeschlossen ist. Die untere Ausgangsklemme 82 ist mit der einen oder ersten Seite der Relaisspule 88 des Relais 87 verbunden, während die andere Seite der Relaisspule 88 geerdet ist. An die erste Seite der Relaisspule ist noch ein Verzögerungskondensator 90 angeschlossen. Ist der sich ordnungsgemäß am Fahrzeug befindliche Grasfangsack nicht oder noch nicht vollständig gefüllt, so befindet sich der Grasfangsackschalter 80 in seiner in der Zeichnung eingezeichneten Stellung, in der die Eingangsklemme 80a mit der oberen Ausgangsklemme 81 über den Relaisschalter verbunden ist. In einer solchen Stellung wird das Relais 87 nicht erregt und befindet sich in der aus der Zeichnung erkennbaren Stellung. In dieser Stellung besteht eine geschlossene Verbindung von dem Schalter 80 über den Rückstellschalter 84 und über den Relaisschalter in seiner oberen Stellung zu der unteren Eingangsklemme 64 des Auswahlschalters 60. Hierbei ist noch kurz darauf hinzuweisen, daß den beiden Eingangsklemmen des Relaisschalters des Relais 87 zwei Ausgangsklemmen zugeordnet sind, wobei die obere Ausgangsklemme an die Eingangsklemme 64 und die untere Ausgangsklemme des Relaisschalters an die erste Seite der Relaisspule 88 angeschlossen ist. Ist der Grasfangsack gefüllt oder wird der gefüllte Zustand erreicht, dann verstellt sich der Schalter 80 in seine untere Position, in der die Verbindung zu der Eingangsklemmme 64 durch die Aktivierung des Relais 87 unterbrochen ist. Befindet sich bei einer derartigen Bedingung der Auswahlschalter 60 in seiner unteren Stellung, in der die untere Eingangsklemme 64 mit der Zapfwellenkupplung verbunden ist, so wird der Antrieb für die Zapfwelle ausgerückt. Die untere Ausgangsklemme des Relais 87, die mit der ersten Seite der Relaisspule 88 verbunden ist, gehört zu einem Haltekreis und ermöglicht das Halten des Relais 87 in seinen aktivierten Zustand. Nachdem die Bedienungsperson den Fangsack entleert hat, kehrt der Fangsackschalter 80 nach einem ordnungsgemäßen Installieren des Fangsackes am Fahrzeug in seine obere Stellung zurück, während das Relais 87 in seinem erregten Zustand durch den Rückstellschalter 84 und den sich in seiner unteren Stellung befindlichem Relaisschalter des Relais 87 gehalten wird. Über den Zustandkreis 70 kann die Betriebsmöglichkeit für die Zapfwelle bei sich in seiner unteren Stellung befindlichem Auswahlschalter 60 wieder aufgenommen werden, wenn ein Schaltknopf odgl. an dem Rückstellschalter 84 momentan zum Unterbrechen der Stromführung zu der unteren Ausgangsklemme des Relaisschalters des Relais 87 betätigt wird. Hierdurch wird das Relais 87 deaktiviert, der Relaisschalter stellt sich in seine obere Stellung zurück und es besteht von dem Fangsackschalter 80 zu der unteren Eingangsklemme 64 des Auswahlschalters 60 eine geschlossene Verbindung. Eine Anzeigelampe 94 ist noch zwischen der Stromquelle und der Eingangsklemme 64 des Auswahlschalters vorgesehen. Sie gibt ein visuelles Zeichen, wenn der Fangsackschalter 80 umschaltet und die Stromversorgung zur Zapfwelle unterbricht.

Ein Überbrückungskreis 100, mit dem die an sich geforderte Anwesenheit der Fahrerperson auf dem Fahrersitz ignoriert werden kann, ist zwischen dem Anwesenheitsschalter 26 und dem Zapfwellenschalter 40 vorgesehen, um einen alternativen Weg zur Masse von dem Sitzrelais 27 über den Zapfwellenschalter 40 zu ermöglichen. Der Überbrückungskreis 100 ist mit einer Sperrdiode 102 versehen, die in der Verbindung zwischen der Spule 28 des Sitzrelais 27 und der Eingangsklemme eines auf eine Antriebsbedingung ansprechenden und in den Ansprüchen als Zustandschalter bezeichneten Schalters in Form eines Bremsschalters 104 vorgesehen ist. Die Ausgangsklemme des Bremsschalters 104 ist an die untere Eingangsklemme 42b des Zapfwellenschalters 40 angeschlossen. Der Bremsschalter 104 ist, wie aus der Zeichnung zu ersehen ist, während des Betriebs des Fahrzeugs oder in dessen ungebremsten Zustand offen. Sobald das Fahrzeug sich in einer Park- oder Bremsstellung befindet, schließt der Bremsschalter 104 und es entsteht eine geschlossene Verbindung zwischen der Spule 28 des Sitzrelais und der unteren Eingangsklemme 42b des Zapfwellenschalters 40. Wird nun noch der Zapfwellenschalter in seine untere oder AUS-Stellung verstellt, so wird die Eingangsklemme 42b an Masse angelegt und ein alternativer Weg für den durch die Spule 28 des Sitzrelais 27 fließenden Strom ist ermöglicht. Aus der Zeichnung ist außerdem noch ersichtlich, daß der Ausgang der Spule 20 des Startrelais 19 an die Eingangsklemme des Bremsschalters 104 angeschlossen ist, so daß der Verbrennungsmotor nur angelassen werden kann, wenn die Bremse des Fahrzeugs angezogen, d. h. der Bremsschalter 104 geschlossen ist und wenn sich der Zapfwellenschalter 40 in seiner AUS-Stellung befindet und wenn die Eingangsklemme 42b an Masse angelegt ist. Eine Anzeigelampe 108 ist schließlich noch zwischen der Stromquelle und der Eingangsklemme 42b des Zapfwellenschalters 40 vorgesehen. Sie leuchtet auf, wenn die Eingangsklemme 42b mit der Masse verbunden ist, um anzuzeigen, daß das Fahrzeug startfertig ist.

Die vorliegende Verdrahtung macht es möglich, daß der Fahrzeugmotor weiter laufen kann, auch wenn sich eine Bedienungsperson nicht auf dem Fahrersitz befindet. Um dies aber bewerkstelligen zu können, muß die Bedienungsperson zunächst den Zapfwellenschalter 40 in seine AUS-Stellung verstellen, in der seine Eingangsklemme 42b geerdet ist. Eine zweite Bedingung ist, daß sich das Fahrzeug in einem Zustand befindet, in dem der Bremsschalter 104 geschlossen ist, d. h. die Park- oder Feststellbremse ist angezogen. Unter diesen Bedingungen wird durch den Überbrückungskreis 100 eine alternative Erdungsleitung von der Spule 28 des Relais 27 über die Sperrdiode 102, den Bremsschalter 104 und die Klemmen 42b und 40b des Zapfwellenschalters 40 ermöglicht, und die Bedienungsperson kann den Fahrersitz verlassen, wobei der Sitzschalter 30 öffnet und die Spule 28 aber stromführend bleibt, um eine Deaktivierung des Relais 27 zu verhindern. Wird aber unter diesen Bedingungen zu irgendeinem Zeitpunkt der Bremsschalter 104 geöffnet oder der Zapfwellenschalter 40 aus seiner AUS-Stellung in eine Betriebsstellung verstellt, so wird das Relais 27 deaktiviert und die Zündung des Verbrennungsmotors geerdet, so daß sich der Verbrennungsmotor als Folge sofort ausstellt.

## Patentansprüche

1. Selbstfahrendes Fahrzeug, insbesondere Rasentraktor, mit einem insbesondere zum Starten und Zünden eines Verbrennungsmotors dienenden Stromkreis, der einen Sicherheitsschalter (30), der bei Abwesenheit eines Fahrers öffnet, einen Zubehörschalter (40), der zum Betreiben eines Antriebs aus einer AUS-Stellung in eine Betriebsstellung verstellbar ist, und einen Zustandschalter (104) aufweist, der in Abhängigkeit von einer Fahrzeugbedingung verstellbar ist, wobei sich der Verbrennungsmotor je nach der Schaltstellung von Sicherheits-, Zubehör- und/oder Zustandschalter selbsttätig abstellt, dadurch gekennzeichnet, daß der Stromkreis einen Überbrückungskreis (100) aufweist, in dem der Zustandschalter (104) vorgesehen ist und der einenends stromaufwärts des Sicherheitsschalters (30) an dessen Zuleitung und anderenends an den Zubehörschalter (40) derart angeschlossen ist, daß er bei sich in seiner AUS-Stellung befindlichem Zubehörschalter (40) und geschlossenem Zustandschalter (104) geerdet ist.

2. Fahrzeug nach Anspruch 1, dadurch gekennzeichnet, daß der Sicherheitsschalter (30) im geschlossenen Zustand geerdet ist, daß stromaufwärts des Sicherheitsschalters (30) ein Relais (27) vorgesehen ist, dessen Relaisschalter bei erregter Spule (28) eine den Motor sonst abstellende Leitung unterbricht, und daß stromabwärts des Relais (27) und stromaufwärts des Sicherheitsschalters (30) der Überbrückungskreis (100) mit seinem einen Ende an die Zuleitung zum Sicherheitsschalter (30) zwischen Relais (27) und Sicherheitsschalter (30) angreift.

3. Fahrzeug nach Anspruch 1, dadurch gekennzeichnet, daß stromaufwärts des Sicherheitsschalters (30) ein Relais (27) vorgesehen ist, dessen Relaisschalter bei erregter Spule (28) und geschlossenem Sicherheitsschalter (30) den Zubehörschalter (40) in seiner Betriebsstellung mit der Masse zum Betreiben des Antriebs verbindet.

4. Fahrzeug nach einem oder mehreren der vorherigen Ansprüche mit einem Zündschalter (10) und einem Startrelais (19), dadurch gekennzeichnet, daß der Ausgang der Spule (20) des Startrelais (19) mit dem Eingang des Zustandschalters (104) verbunden und bei sich in seiner AUS-Stellung befindlichem Zubehörschalter (40) geerdet ist und daß das dem Sicherheitsschalter (30) vorgeschaltete Relais (27) mit seinem Spuleneingang mit einer Stromquelle (12) in der Start- und in der Betriebsstellung des Zündschalters (10) verbunden ist, wobei die Verbindung zwischen Startrelaisspule (20) und Zustandschalter (104) und die Verbindung zwischen Sicherheitsschalter (30) und zugehöriger Relaisspule (28) über eine eine Sperrdiode (102) aufweisende Leitung miteinander verbunden sind.
